# EUROPEAN PATENT APPLICATION

(11) **EP 3 202 862 A2**
(43) Date of publication of application: **09.08.2017**
(21) Application number: 17158595.3
(22) Date of filing: 10.03.2015
(51) Int. Cl.: C09D 11/037, C09D 11/50, B42D 25/00, B41M 3/14

(54) **CHROMOPHORIC COMPOSITIONS**

(62) Divisional of application: 15158535.3
(71) Applicant: BASF SE, 67056 Ludwigshafen am Rhein (DE)
(72) Inventor: Reichert, Hans, 79618 Rheinfelden (DE); Reichelt, Helmut, 67435 Neustadt (DE); Fischer, René, 4105 Biel-Benken (CH); Eberius, Karin, 79639 Grenzach (DE)
(74) Representative: BASF IP Association

(57) **Abstract**

The present invention relates to printing ink formulations containing as chromophore an IR absorbing compound and specific stabilizing compounds which prevent the oxidative degradation of the chromophore in an oxidative drying printing ink. Further aspects of the invention are a security document comprising a substrate and the hardened printing ink and the use of the specific compounds as protective agents for chromophores in an oxidative drying printing ink for security printing.

## Description

The present invention relates to chromophoric compositions, in particular to compositions containing as chromophore an IR absorbing compound and specific stabilizing compounds which prevent the degradation of the chromophore. Further aspects of the invention are a printing ink containing an IR absorbing chromophore and said specific stabilizing compounds, a security document comprising a substrate and the hardened printing ink and the use of the specific compounds as stabilizers for chromophores in radically polymerisable compositions, such as laquers, inks, paints or coatings.

### DESCRIPTION OF THE RELATED ART

Colourless or barely coloured IR absorbers meet a significant technical need in a wide range of applications, such as security printing (bank notes, credit cards, identity cards, passports etc.), invisible and/or IR readable bar codes, the laser-welding of plastics, the curing of surface-coatings using IR radiators, the drying and curing of prints, the fixing of toners on paper or plastics, optical filters for PDPs (plasma display panels), laser marking e.g. of paper or plastics, the heating of plastics preforms, heat shielding applications, etc.

A large number of organic and inorganic substances belonging to different compound classes and with a great variety of different structures are known for the application as IR absorbers. Notwithstanding that large numbers of known compound classes and structures, the provision of products with a complex profile of properties often presents difficulties. There is a continuing demand for IR absorbers that are "colourless" (i.e. with the minimum possible inherent colour), and that simultaneously meet the technical stability requirements (e. g. chemical stability, heat stability and/or light stability).

A special field of application for colourless IR absorbers regards inks for printing processes which are used for printing currency and other security documents, also referred to as "security printing". Typical security printing processes are processes, wherein an ink composition is employed that is designed to selectively absorb radiation in parts of the "optical infrared" spectrum, whilst being transparent in other parts of it. IR absorbers for security printing are available, for example, from "American Dye Source", but virtually all of them have a noticeable absorption in the VIS range of the spectrum (from 400 to 700 nm).

US7282164 discloses a stabilized ink composition comprising a metal-dithiolene dye and a singlet oxygen quencher, such as, for example, ascorbic acid and sodium azide.

JP56122876A relates to an ink composition which contains a dye, dialkylthiourea and water. The composition has antirust property. The dialkylthiourea exerts antirust effect on metal ball and chip and includes, for example, 1,3-dimethylthiourea, 1,3-diethylthiourea and 1,3-dibutyl-thiourea. The dye is soluble in aqueous medium and includes, for example, C.I. 45410 and C.I. 42755.

JP 59045372A relates to a composition containing an agent of formula R1R2N-C(:Y)-NR3R4 (I), wherein Y is =0 or =S and R1-4 are each H or lower alkyl provided that at least 1 is H but not all. When used for a ball-pointed pen, the composition may include also an anti-corrosive agent (e.g. benzotriazole, Na octyloxymethane phosphonate or dioctyl thiophosphate) for preventing the corrosion of metal ball.

JP05271603A discloses an ink for ball point pen having tip made of stainless steel comprising an pigment, dispersant and water as a base material and containing a dialkylthiourea in an amt. of 0.05-0.1 wt.% based on the total of the ink. The ink reduces the friction between ball and holder and ball in stainless tip of ball point pen.

KR2006005625A relates to an ink composition which comprises a thiourea derivative represented by formula 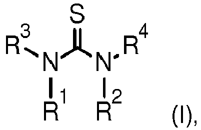 a colorant; and a solvent, wherein R¹ to R⁴ are independently H, a substituted or unsubstituted C₁-C₁₀alkyl group, a substituted or unsubstituted C₁-C₂₀heteroalkyl, alkoxy, alkyl sulfonamide, acylamino, alkylureido, hydroxyalkyloxyalkyl, dialkylaminoalkyl or pyridylalkyl group, a substituted or unsubstituted C₂-C₂₀alkenyl, alkoxycarbonyl or alkoxycarbonylamino group, a substituted or unsubstituted C₆-C₂₀ aryl sulfonamide, arylureido, pyridylalkyl, imidazolyl, arylalkyl, heteroaryl, heteroarylalkyl or heteroarylalkenyl group, a carbamoyl group, a sulfamoyl group, a sulfo group and its salt, a carboxyl group and its salt, a hydrazine group, a hydrazone group, or a substituted or unsubstituted C₃-C₂₀hetero cycloalkyl group; and R³ and R⁴ can be connected together to form a substituted or unsubstituted C₁-C₂₀alkylene group. The ink composition is reduced in the mobility of a colorant, is improved in the adhesion to media, is minimized in bleeding, and is enhanced in wafer fastness, dry and wet rubbing resistance and storage stability.

JP 2009292056A relates to a writing implement comprises water based ink composition containing coloring agent, water, thiocyanuric acid and/or its salt, where the ink is incorporated into an viewable axial cylinder from the outside. The color of ink accommodated in the transparent container of writing implement is not faded or changed to brown color with respect to time.

IR-absorbing compounds are, for example, described in WO2006/015414, US2008/0241492, US5,282,894, WO2007/091094, WO2007/132214, M. Arca et al. describe in J. Chem. Soc., Dalton Trans. 1998, 3731-3736, JP2003-262953 A, JP2004-045653 A, JP2005-99755 A, M.C. Aragoni et al. describe in Eur. J. Inorg. Chem. 2003, 1939-1947 and WO 2008/086931, WO 2012/152584 and WO 2012/069518.

There is still a need for high-end applications of IR absorbing compounds of improving their fastness properties against oxidation. This property is particularly important for applications in the field of security printing. It is of prime importance in security printing applications that the IR absorbing properties remain high after the drying/hardening step of the printing ink and that the IR spectrum remains essentially unchanged as compared to its initial form before the drying/hardening step. Undergoing essentially no change in the absorption characteristic is fundamental for quality control and for the detection of counterfeit.

### DESCRIPTION OF THE INVENTION

It has now been found, surprisingly, that IR absorbers combined with specific compounds having a sulphur functional group exhibit high resistance against oxidative degradation. The absorption spectrum remains essentially unchanged under oxidative conditions. Due to this unique application property such compositions are particularly suitable for security printing, especially for bank notes.

One aspect of the invention is a composition, comprising
(a) an IR absorber,
(b) a protective agent having a structural element of formula 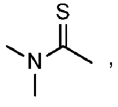 or 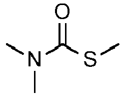 wherein each open valence \ indicates a bond to an organic residue and wherein the structural element may be part of a ring system.

In a preferred embodiment the composition is part of a radically polymerisable composition like a coating, paint laquer or ink, preferably an oxidatively drying coating, paint, lacquer or ink.

In principal all prior art IR absorbers mentioned above which are compatible with the protective agents are suitable components in the instant invention.

The compositions have additionally at least one of the following advantageous properties:
- good fastness to chemicals to solvents (like toluene, acetone or dichloromethane),
- good fastness to boiling water,
- good fastness to light,
- colourlessness (i.e. minimal absorption in the VIS range of the spectrum (from 400 to 700 nm))
- good heat stability,
- high compatibility with a multiplicity of formulations, in particular oxidative hardening printing ink formulations used especially in security printing.

For illustration: nickel dithiolene complexes with simple alkyl substituents (like **C-1**, **C-2**, or **C-3**) are of high interest as colorless IR absorbers, but are of limited use for e.g. in security printing due to their insufficient fastness against solvents like e.g. acetone, toluene, chlorobenzene, ethylacetate and 1,2-dichloroethane or against hypochlorite and boiling water. 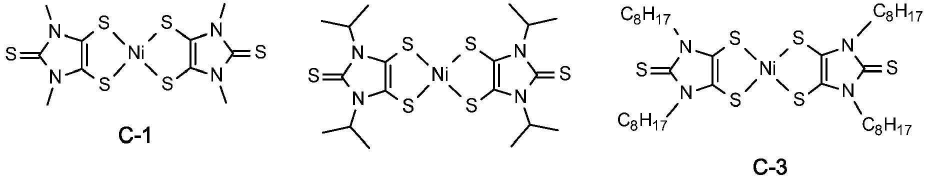 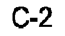 On the other hand said nickel dithiolene complexes exhibit very good resistance against the solvents mentioned above, hypochlorite and boiling water when used in combination with the protecting agents of the present invention.

For example a suitable IR absorber is selected from metal dithiolene complexes, polymethines, phthalocyanines, naphthalocyanines, quinone-diimmonium salts, aminium salts, rylenes, indium tin oxide, antimony tin oxide, lanthanum hexaboride, tungsten bronzes, copper salts and mixtures thereof.

The weight ratio between IR absorber and protective agent can vary in a wide range. For example from 10 : 1 to 1 : 10, preferably from 5 : 1 to 1 : 5.

Preferred is a composition wherein the IR absorber is a metal dithiolene complex of formula (IIa) or (IIb) 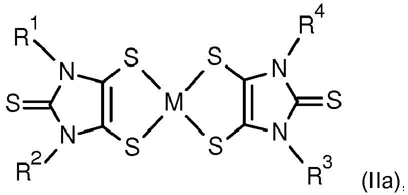 or 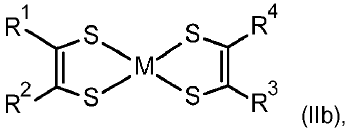 wherein
M is Ni, Pd, or Pt;
R¹, R², R³ and R⁴ are independently of each other C₁-C₂₅alkyl, perfluoro-C₁-C₂₅alkyl, C₆-C₂₄aryl, which may optionally substitueted with F, Cl, CF₃, or OCH₃; or C₂-C₂₀heteroaryl;
a phthalocyanine of formula (IIIa), (IIIb), (IIIc), (IIId) or (IIIe) 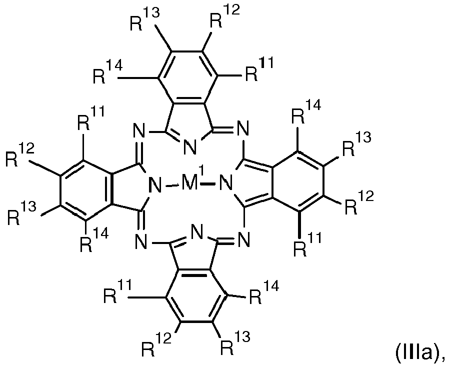 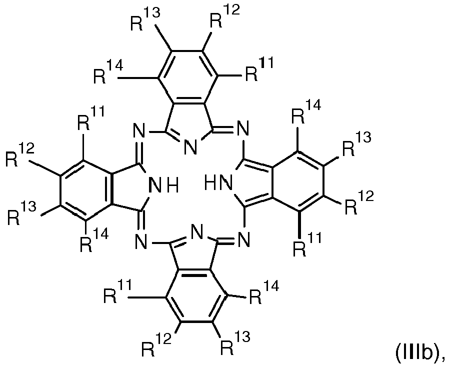 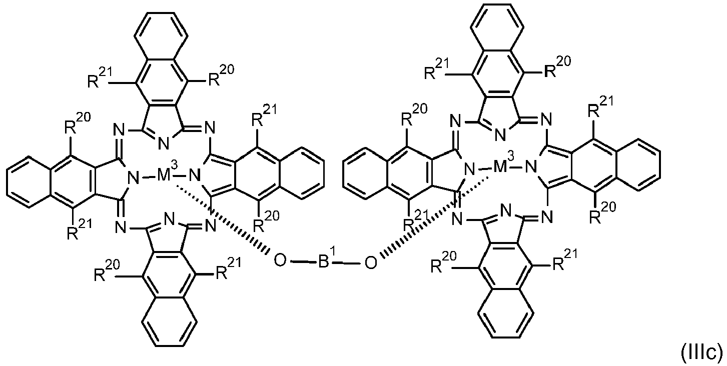 wherein
M¹ is Cu, Fe, Mn, Pd, Pt, VO, Si(OR¹⁶)₂, Al(R¹⁵) or Ga(R¹⁵),
M³ in formula (IIIc) is Al or Ga; and B¹ in formula (IIIc) is C¹-C¹²alkylene, such as - CH₂-CH₂-, C¹-C¹²alkylene which is interrupted by one or more oxygen atoms or C¹-C¹²alkylene which is substituted by at least one OH group, such as -CH₂-HC(OH)-CH₂-;
R¹⁵ is CI, OH, or OR¹⁶;
R¹¹ and R¹⁴ are independently of each other H, F, OR¹⁶, SR¹⁶, or NR¹⁷R^{17'},
R¹² and R¹³ are independently of each other H, F, OR¹⁶, SR¹⁶, NHR¹⁷, or NR¹⁷R^{17'}, R¹⁶ is C₁-C₁₂alkyl, (C₂H₄O)ₙOR¹⁸, or phenyl;
R²⁰ and R²¹ are independently of each other H, F, OR¹⁶, SR¹⁶, NHR¹⁷, or NR¹⁷R^{17'};
R¹⁷ and R^{17'} are independently of each other C₁-C₁₂alkyl, (C₂H₄O)ₙOR¹⁸, or phenyl; or
R¹⁷ and R^{17'} together may represent a 5- or 6-membered aliphatic ring, wherein one C-atom in the ring may be replaced by oxygen, to form a pyrrolidine, piperidine, 2-methylpiperidine or morpholine radical;
R¹⁸ is C₁-C₁₂alkyl;
n is 0 1, 2, 3 or 4; 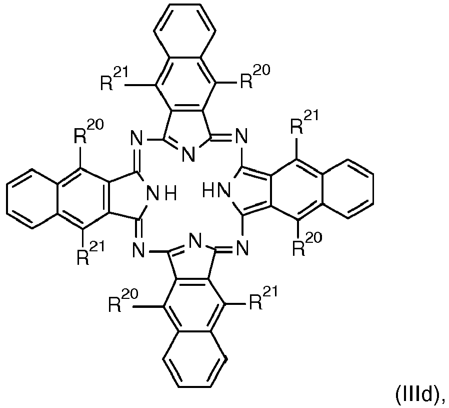 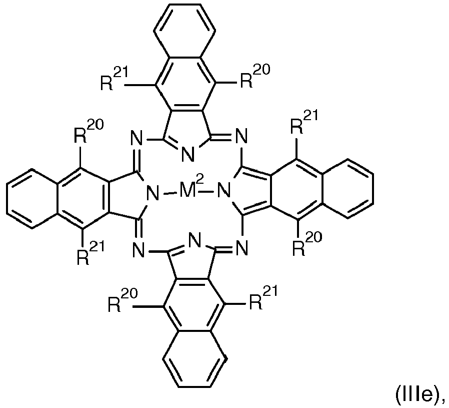 wherein
   M² is Cu, Fe, Mn, Pd, Pt, Si(OR¹⁶)₂, Al(R¹⁵) or Ga(R¹⁵),
   R¹⁵ is CI, OH, or OR¹⁶;
   R²⁰ and R²¹ are independently of each other H, F, OR¹⁶, SR¹⁶, NHR¹⁷, or NR¹⁷R^{17'}, R¹⁶ is C₁-C₁₈alkyl, (C₂H₄O)ₙOR¹⁸, or phenyl;
   R¹⁷ and R^{17'} are independently of each other C₁-C₁₂alkyl, (C₂H₄O)ₙOR¹⁸, or phenyl; or
   R¹⁷ and R^{17'} together may represent a 5- or 6-membered aliphatic ring, wherein one C-atom in the ring may be replaced by oxygen, such as pyrrolidine, piperidine, 2-methylpiperidine and morpholine;
   R¹⁸ is C₁-C₁₂alkyl;
   n is 0 1, 2, 3 or 4;
a compound of formulae (IVa) to (IVc) 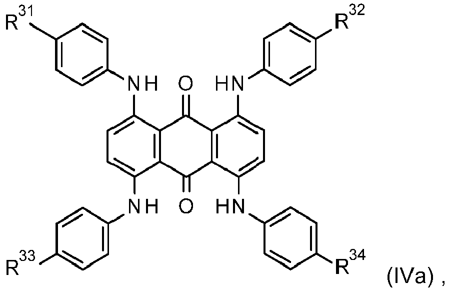 wherein
- R³¹, R³², R³³ and R³⁴: are independently of each other C₁-C₆alkyl, or C₁-C₄alkoxy; 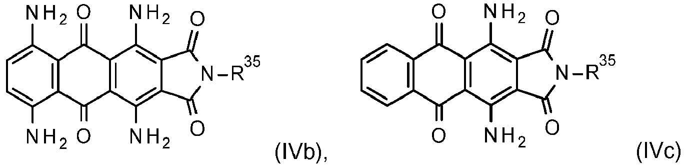
wherein
- R³⁵: is C₁-C₁₈alkyl, which can optionally be interupted by 2 to 4 oxygen atoms;
a compound of formulae (Va) or (Vb) 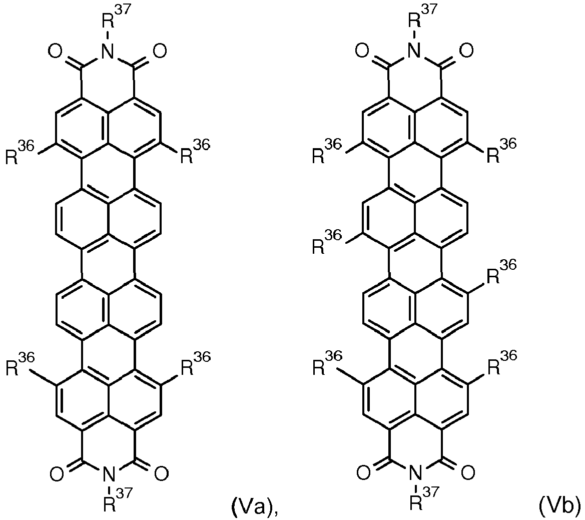 wherein
- R³⁶: is H, X¹R³⁸, or NR³⁸R³⁹ ;
- X¹: is O, S, or NH;
- R³⁸: is C₁-C₄alkyl or phenyl which phenyl can optionally be substituted by C₁-C₁₈alkyl;
- R³⁹: is H, or C₁-C₄alkyl;
- R³⁷: is C₁-C₁₈alkyl, phenyl, or 2,6-diisopropylphenyl;
or a compound of formulae (VIa) to (VIc) 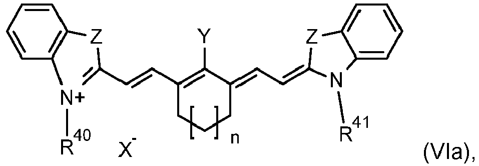 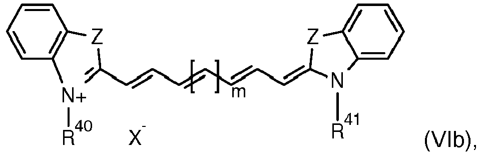 or 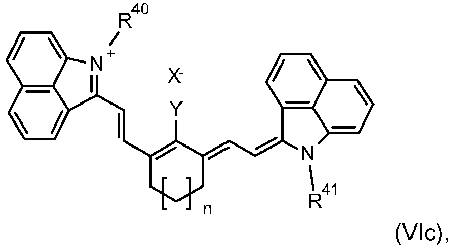 wherein
R⁴⁰ and R⁴¹ are independently of each other C₁-C₁₈alkyl;
Y is Cl, phenyl, 4-dimethylaminopyridyl chloride;
Z is O, S, NMe, or C(CH₃)₂,
n is 0, or 1;
m is 0, 1, or 2; and
X- = I-, BF₄-, PF₆-, R⁴²-C₆H₄-SO₃-, and
R42 is H, or CH₃.

The alkyl or alkenyl groups may be linear or branched. C¹-C¹²alkylene which is interrupted by one or more oxygen atoms is preferably derived from ethylenoxide.
Aryl means especially phenyl or naphthyl.
Heteroaryl is, for example pyrrolidine, piperidine, 2-methylpiperidine and morpholine.
These definitions apply for all structural formulae.

Individual IR absorber compounds which are particularly suitable are compounds of the following formulae: 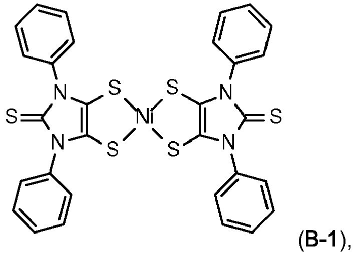 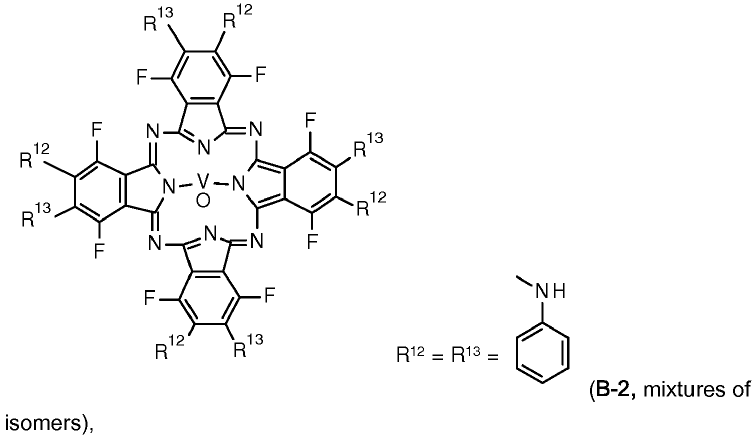 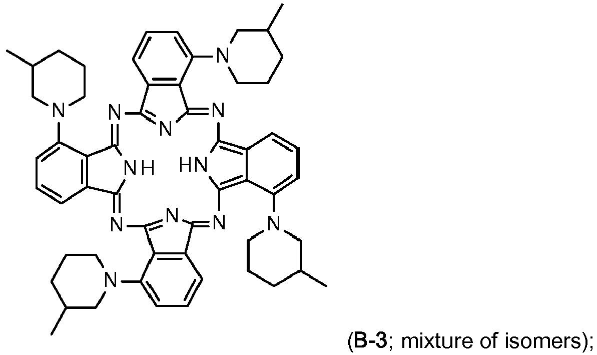 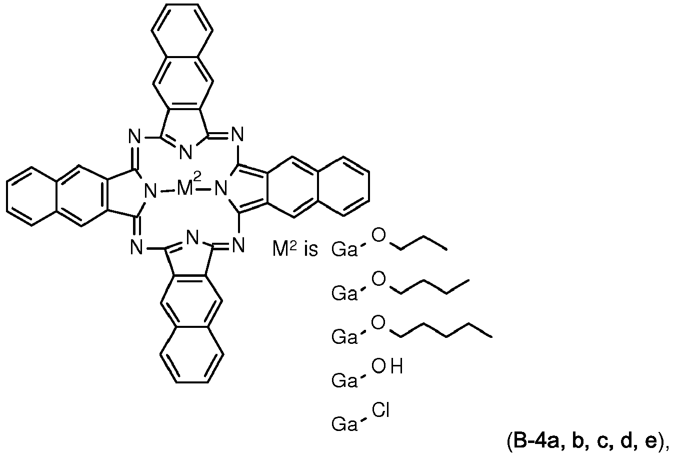 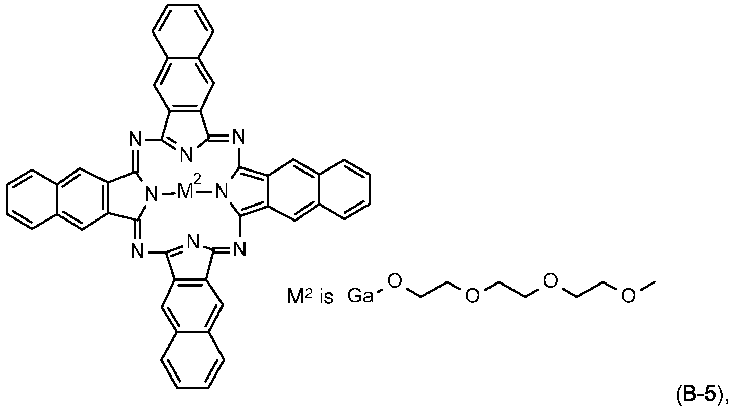 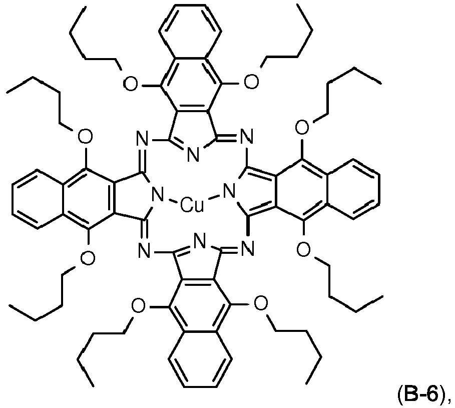 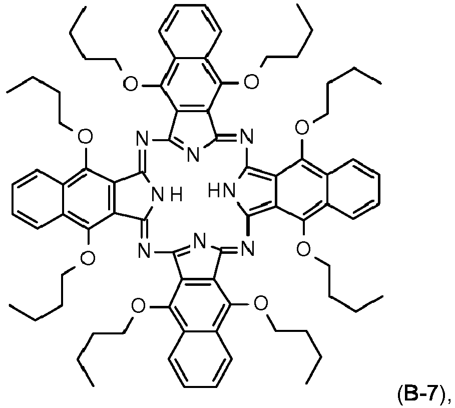 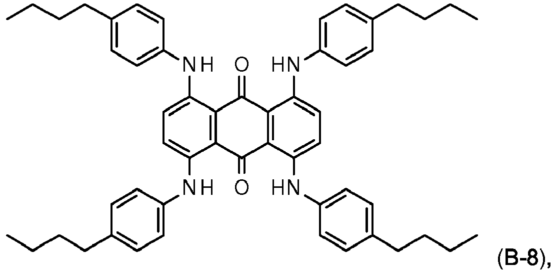 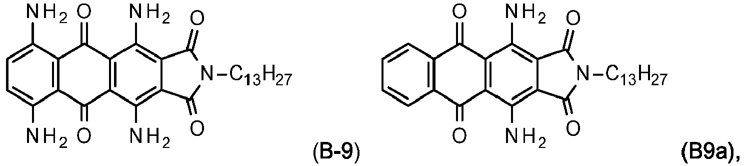 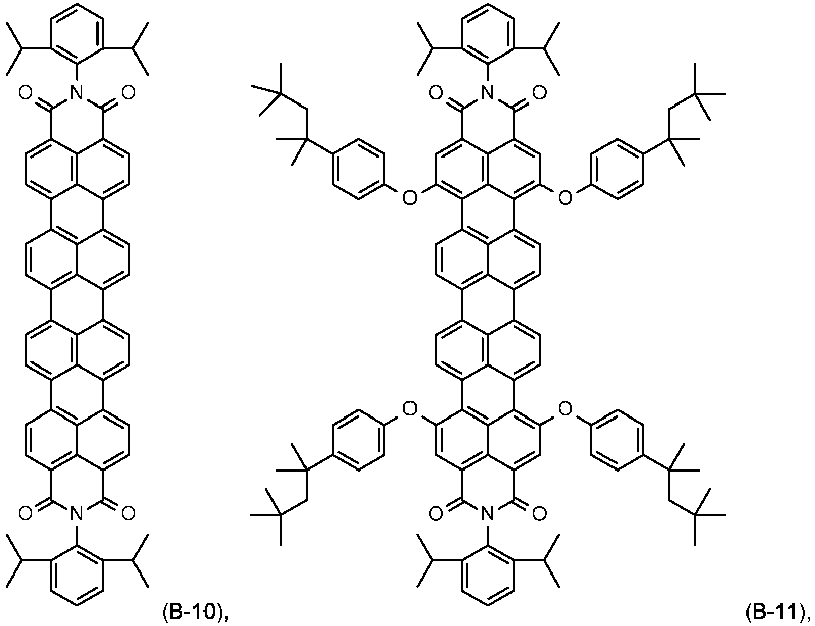 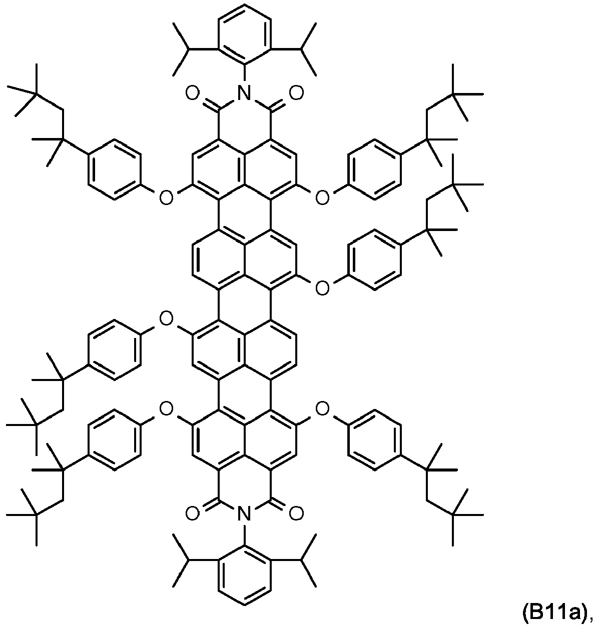 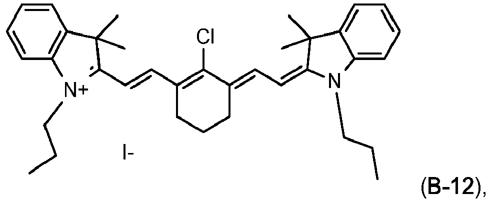 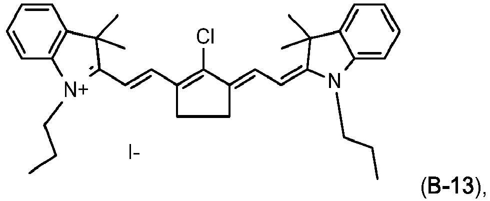 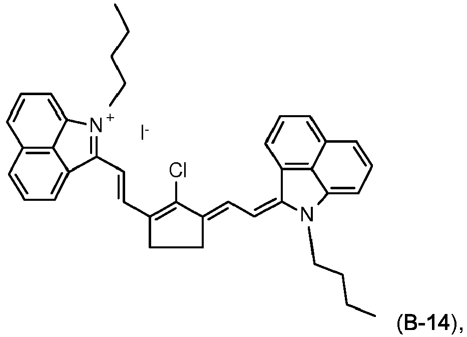 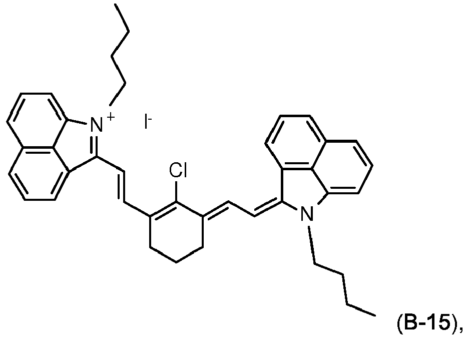 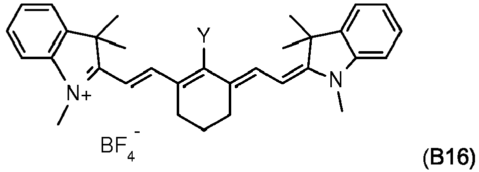 and

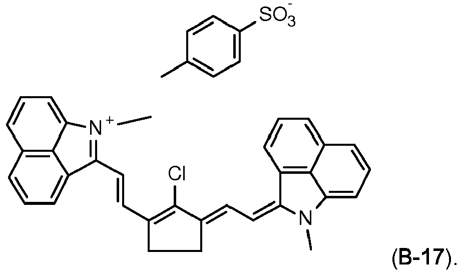

The protective agent is, for example, a compound of formula (X) 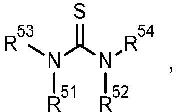 wherein R⁵¹ and R⁵² are independently of each other C₁-C₁₈ alkyl, C₁-C₁₈ alkenyl or C₆-C₁₀aryl, which may optionally be substituted by Cl, Br or F;
or R⁵¹ and R⁵² together with the atoms to which there are bonded form a ring 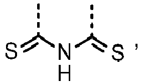 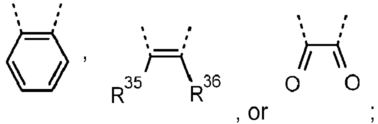 ------ indicates the bond which forms the ring;
R⁵³ and R⁵⁴ are independently of each other H, C₁-C₁₈ alkyl or C₁-C₁₈ alkenyl which may optionally be substituted by Cl, Br or F;
a compound of formulae (XI) 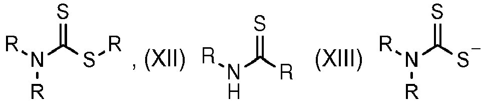 cation⁺ , 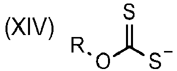 cation⁺ 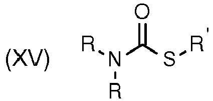 R and R' are independently C₁-C₈ alkyl, C₂-C₈ alkenyl, phenyl, benzyl, phenethyl, naphthyl or trichlorallyl;
R"is C₁-C₈ alkyl and cation⁺ may be any cation, preferably tha cation of Li, Na, K, or the ammonium or C₁-C₁₈trialkylammonium cation; or a compound of formula 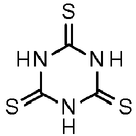 (trithiocyanuric acid).

Individual protective compounds are, for example, compounds of the following formulae: a compound of formula 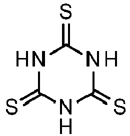 (trithiocyanuric acid), 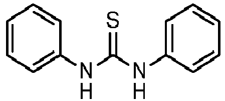 (diphenyl thiourea), 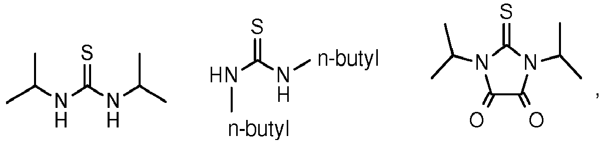 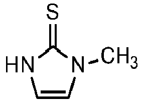 (2-mercapto-1-methylimidazole), 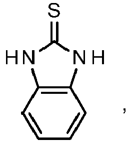 (2-mercapto-benzimidazole), 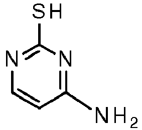 (4-amino-2-mercaptopyrimidine), 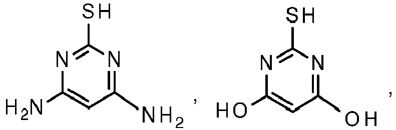 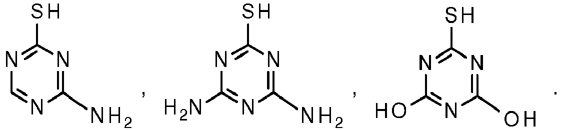 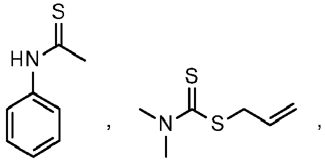 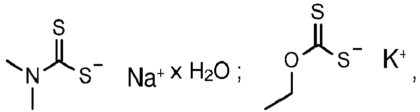 (n-butyl)₄N⁺SCN- , ((n-butyl)₄N⁺)₂ S₂O₃²⁻ or

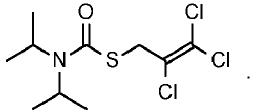

Of particular interest are compounds of the following formulae: 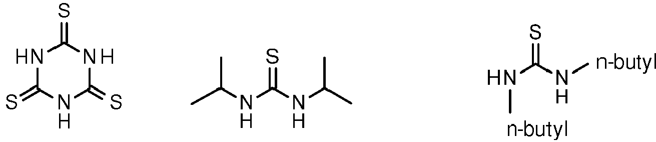 and

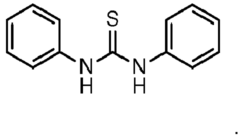

The compositions of IR absorbers and protective agent may be physical mixtures.

In an alternative the compositions may comprise coated particles where the IR absorber forms the core and the protective agent forms the shell. Such mixtures can be obtained e.g. by dispersing the IR absorber in a solvent in which the protective agent is dissolved and subsequent, slow removal of the solvent.

In another alternative the compositions may also comprise mixed crystals or solid solutions obtained, for example, by dissolving both the IR absorber and the protective agent in a suitable solvent and subsequent co-precipitation of the dissolved material. Another way to obtain solid solutions or mixed crystals is salt kneading of both components.

The compositions may also comprise powder-powder mixtures obtained by co-milling, co-kneading or co-sieving of IR absorber and protective agent.

The compositions may be part of an organic coating composition.

The compositions of the present invention can be used inter alia for security printing, invisible and/or IR readable bar code.

Security printing is the field that deals with the printing of items such as currency, passports, tamper-evident labels, stock certificates, postage stamps, identity cards, etc. The main goal of security printing is to prevent forgery, tampering or counterfeiting.

In the field of automated banknote processing, IR-absorption plays an important role. Most of the currently circulating currency carries not only visibly coloured printings, but also specific features which are only detectable in the infrared part of the spectrum. Generally, these IR-features are implemented for use by automatic currency processing equipment, in banking and vending applications (automatic teller machines, automatic vending machines, etc.), in order to recognize a determined currency bill and to verify its authenticity, in particular to discriminate it from replicas made by colour copiers.

All security documents are required to have good stability and durability. In the case of bank notes, these requirements are extreme, as bank notes are subjected to toughest use conditions by the public - they are subjected to material stress by folding, crumpling etc., subjected to abrasion, exposed to weather, exposed to bodily fluids such as perspiration, laundered, dry-cleaned, ironed etc. - and, after having been subjected to this, are expected to be as legible as when they started. Furthermore, it is essential that the documents nevertheless should have a reasonable life time, ideally of some years, despite suffering the afore-mentioned conditions. During this time, the documents, and thus the inks on them (including invisible security markings), should be resistant to fading or colour change. Hence, any ink used in a security printing process should, when cured, be robust, water-resistant, resistant to various chemicals and flexible. The ingredients of the ink, in particular chromophores and IR absorbers should resist oxidative degradation. Moreover, as certain states are moving away from the use of paper as the substrate for bank notes, the employed printing ink formulations should be useable on plastics as well as paper.

Consequently another aspect of the invention is a printing ink formulation, especially for security printing, comprising
a) a composition as described above,
b) a polymeric binder,
c) optionally a solvent,
d) optionally at least one colorant, and
e) optionally at least one further additive.

In security printing, the compositions of the present invention are added to a printing ink formulation. Suitable printing inks are water-based, oil-based or solvent-based printing inks, based on pigment or dye, for inkjet printing, flexographic printing, screen printing, intaglio printing, offset printing, laser printing or letterpress printing and for use in electrophotography.

In the context of the present invention, the expression "printing ink" also encompasses formulations that in addition to the compositions of the present invention comprise a colorant. The expression "printing ink" also encompasses printing lacquers that comprise no colorant.

Suitable components of printing inks are conventional and are well known to those skilled in the art. Examples of such components are described in "Printing Ink Manual", fourth edition, Leach R. H. et al. (eds.), Van Nostrand Reinhold, Wokingham, (1988). Details of printing inks and their formulation are also disclosed in "Printing Inks"-Ullmann's Encyclopedia of Industrial Chemistry, Sixth Edition, 1999 Electronic Release. A formulation of an IR-absorbing intaglio ink formulation is described in US 20080241492 A1. The disclosure of the afore-mentioned documents is incorporated herein by reference.

The printing ink formulation according to the invention contains in general from 0.0001 to 25% by weight, preferably from 0.001 to 15% by weight, in particular from 0.01 to 5% by weight, based on the total weight of the printing ink formulation, of component a).

The IR absorbers, especially the metal dithiolene complexes of formula I, are present in the printing ink formulation in dissolved form or in solid form (in a finely divided state).

The weight ratio between IR absorber and protective agent can vary in a wide range. For example from 10 : 1 to 1 : 10, preferably from 5 : 1 to 1 : 5

The printing ink formulation according to the invention contains in general from 5 to 74% by weight, preferably from 10 to 60% by weight, more preferably from 15 to 40% by weight, based on the total weight of the printing ink formulation, of component b).

Suitable solvents are selected from water, organic solvents and mixtures thereof. For the purpose of the invention, reactive monomers which also act as solvents are regarded as part of the afore-mentioned binder component b).

The binder is, for example, a high-molecular-weight organic compound conventionally used in coating/ink compositions. The high molecular weight organic material may be of natural or synthetic origin. High molecular weight organic materials usually have molecular weights of about from 10³ to 10⁸ g/mol or even more. They may be, for example, natural resins, drying oils, rubber or casein, or natural substances derived therefrom, such as chlorinated rubber, oil-modified alkyd resins, viscose, cellulose ethers or esters, such as ethylcellulose, cellulose acetate, cellulose propionate, cellulose acetobutyrate or nitrocellulose, but especially totally synthetic organic polymers (thermosetting plastics and thermoplastics), as are obtained by polymerisation, polycondensation or polyaddition. From the class of the polymerisation resins there may be mentioned, especially, polyolefins, such as polyethylene, polypropylene or polyisobutylene, and also substituted polyolefins, such as polymerisation products of vinyl chloride, vinyl acetate, styrene, acrylonitrile, acrylic acid esters, methacrylic acid esters or butadiene, and also copolymerisation products of the said monomers, such as especially ABS or EVA.

Advantageously, the coating composition further comprises a solvent.

The binder may comprise any one or more polymers selected from the group comprising nitrocellulose, ethyl cellulose, cellulose acetate, cellulose acetate propionate (CAP), cellulose acetate butyrate (CAB), alcohol soluble propionate (ASP), vinyl chloride, vinyl acetate copolymers, vinyl acetate, vinyl, acrylic, polyurethane, polyamide, rosin ester, hydrocarbon, aldehyde, ketone, urethane, polythyleneterephthalate, terpene phenol, polyolefin, silicone, cellulose, polyamide, polyester and rosin ester resins.

The coating composition is preferably a printing ink. The ink according to the present invention comprises a binder, optionally an auxiliary agent, and the like.

With respect to the binder resin, a thermoplastic resin may be used, examples of which include, polyethylene based polymers [polyethylene (PE), ethylene-vinyl acetate copolymer (EVA), vinyl chloride-vinyl acetate copolymer, vinyl alcohol-vinyl acetate copolymer, polypropylene (PP), vinyl based polymers [poly(vinyl chloride) (PVC), poly(vinyl butyral) (PVB), poly(vinyl alcohol) (PVA), poly(vinylidene chloride) (PVdC), poly(vinyl acetate) (PVAc), poly(vinyl formal) (PVF)], polystyrene based polymers [polystyrene (PS), styreneacrylonitrile copolymer (AS), acrylonitrile-butadiene-styrene copolymer (ABS)], acrylic based polymers [poly(methyl methacrylate) (PMMA), MMA-styrene copolymer], polycarbonate (PC), celluloses [ethyl cellulose (EC),cellulose acetate (CA), propyl cellulose (CP), cellulose acetate butyrate (CAB), cellulose nitrate (CN)], fluorin based polymers [polychlorofluoroethylene (PCTFE), polytetrafluoroethylene (PTFE), tetrafluoroethylene-hexafluoroethylene copolymer (FEP), poly(vinylidene fluoride) (PVdF)], urethane based polymers (PU), nylons [type 6, type 66, type 610, type 11], polyesters (alkyl) [polyethylene terephthalate (PET), polybutylene terephthalate (PBT), polycyclohexane terephthalate (PCT)], novolac type phenolic resins, or the like. In addition, thermosetting resins such as resol type phenolic resin, a urea resin, a melamine resin, a polyurethane resin, an epoxy resin, an unsaturated polyester and the like, and natural resins such as protein, gum, shellac, copal, starch and rosin may also be used.

Furthermore, to the binder, a plasticizer for stabilizing the flexibility and strength of the print film and a solvent for adjusting the viscosity and drying property thereof may be added according to the needs therefor.

Suitable solvents are selected from water, organic solvents and mixtures thereof. For the purpose of the invention, reactive monomers which also act as solvents are regarded as part of the afore-mentioned binder component b).

The solvent may comprise any one or more of an ester, such as n-propyl acetate, isopropyl acetate, ethyl acetate, butyl acetate; an alcohol, such as ethyl alcohol, industrial methylated spirits, isopropyl alcohol or normal propyl alcohol; a ketone, such as methyl ethyl ketone or acetone; an aromatic hydrocarbon, such as xylene and toluene. A solvent of a low boiling temperature of about 100°C and a petroleum solvent of a high boiling temperature of 250°C or higher, may be used according to the type of the printing method. An alkylbenzene or the like, for example may be used as a solvent of a low boiling temperature. Examples of solvents are ethoxypropanol, methylethylketon, methoxypropylacetate, diacetonalcohol etc.

Further in addition, an auxiliary agent including a variety of reactive agents for improving drying property, viscosity, and dispersibility, may suitably be added. The auxiliary agents are to adjust the performance of the ink, and for example, a compound that improves the abrasion resistance of the ink surface and a drying agent that accelerates the drying of the ink, and the like may be employed.

A photopolymerization-curable resin or an electron beam curable resin wherein a solvent is not used may also be employed as a binder resin that is a principal component of the vehicle. The examples thereof include an acrylic resin, and specific examples of acrylic monomers commercially available are shown below.

A monofunctional acrylate monomer that may be used includes for example, 2-ethylhexyl acrylate, 2-ethylhexyl-EO adduct acrylate, ethoxydiethylene glycol acrylate, 2-hydroxyethyl acrylate, 2-hydroxypropyl acrylate, 2-hydroxyethyl acrylate-caprolactone addduct, 2-phenoxyethyl acrylate, phenoxydiethylene glycol acrylate, nonyl phenol-EO adduct acrylate, (nonyl phenol-EO adduct)-caprolactone adduct acrylate, 2-hydroxy-3-phenoxypropyl acrylate, tetrahydrofurfuryl acrylate, furfuryl alcohol-caprolactone adduct acrylate, acryloyl morpholine, dicyclopentenyl acrylate, dicyclopentanyl acrylate, dicyclopentenyloxyethyl acrylate, isobornyl acrylate, (4,4-dimethyl-1,3-dioxane)-caprolactone adduct acrylate, (3-methyl-5,5-dimethyl-1,3-dioxane)-caprolactone adduct acrylate, and the like.

A polyfunctional acrylate monomer that may be used includes hexanediol diacrylate, neopentyl glycol diacrylate, polyethylene glycol diacrylate, tripropylene glycol diacrylate, neopentyl glycol hydroxypivalate diacrylate, (neopentyl glycol hydroxypivalate)-caprolactone adduct diacrylate, (1,6-hexanediol diglycidyl ether)-acrylic acid adduct, (hydroxypivalaldehyde-trimethylolpropane acetal) diacrylate, 2,2-bis[4-(acryloyloxydiethoxy)phenyl]propane, 2,2-bis[4-(acryloyloxydiethoxy)phenyl]methane, hydrogenated bisphenol A-ethylene oxide adduct diacrylate, tricyclodecanedimethanol diacrylate, trimethylolpropane triacrylate, pentaerithritol triacrylate, (trimethylolpropane-propylene oxide) adduct triacrylate, glycerine-propylene oxide adduct triacrylate, a mixture of dipentaerithritol hexaacrylate and pentaacrylate, esters of dipentaerithritol and lower fatty acid and acrylic acid, dipentaerithritolcaprolactone adduct acrylate, tris(acryloyloxyethyl) isocyanurate, 2-acryloyloxyethyl phosphate, and the like.

Inks comprising the above resins are free of solvent and are so constituted as to polymerize in chain reaction upon irradiation by an electron beam or electromagnetic waves.

With respect to inks of ultraviolet-irradiation type among these inks, a photopolymerization initiator, and depending on the needs therefor, a sensitizing agent, and auxiliary agents such as a polymerization inhibitor and a chain transfer agent, and the like may be added thereto.

With respect to photo-polymerization initiators, there are, (1) an initiator of direct photolysis type including an arylalkyl ketone, an oxime ketone, an acylphosphine oxide, or the like, (2) an initiator of radical polymerization reaction type including a benzophenone derivative, a thioxanthone derivative, or the like, (3) an initiator of cationic polymerization reaction type including an aryl diazonium salt, an aryl iodinium salt, an aryl sulfonium salt, and an aryl acetophenone salt, or the like, and in addition, (4) an initiator of energy transfer type, (5) an initiator of photoredox type, (6) an initiator of electron transfer type, and the like. With respect to the inks of electron beam-curable type, a photopolymerization initiator is not necessary and a resin of the same type as in the case of the ultraviolet-irradiation type inks can be used, and various kinds of auxiliary agent may be added thereto according to the needs therefor.

Mixtures of two or more photoinitiators may be employed.

For example, the photoinitiator is selected from alpha-hydroxy ketone type compounds, alpha-alkoxy ketone type compounds, alpha-amino ketone type compounds, mono and bisacylphosphine oxide compounds, phenylglyoxylate compounds, oxim ester compounds and onium salt compounds (sulfonium salt compounds and iodoinium salt compounds) and mixtures thereof.

The, at present preferred photinitiators are mono and bisacylphosphine oxide compounds. Mono and bisacylphosphine oxide compounds can be used alone. Alternatively, a mixture of a mono and a bisacylphosphine oxide compound can be used, or the mono and bisacylphosphine oxide compounds can be used in admixture with other photoinitiators, such as, for example, the benzophenone type, alpha-amino ketone type, alpha-hydroxy ketone type, ketal compounds, phenylglyoxylate compounds, oxime ester compounds or onium salt compounds, especially a benzophenone compound, an alpha-hydroxy ketone, alpha-alkoxyketone, or alpha-aminoketone compound, very especially a benzophenone compound, an alpha-hydroxy ketone, or alpha-alkoxyketone compound. An alpha-aminoketone compound can be used, alone or in mixtures with other photoinitiators.

Examples of photoinitiators are known to the person skilled in the art and for example published by Kurt Dietliker in "A compilation of photoinitiators commercially available for UV today", Sita Technology Textbook, Edinburgh, London, 2002.

A preferred embodiment is a printing ink formulation wherein the polymeric binder is an oxidative drying resin.

Oxidation is the classical drying mechanism for lithographic inks, involving the oxygen-induced free radical polymerisation of unsaturated (drying) polymers, such as vegetable oils, for example, linseed oil and tung oil. The oxidant is atmospheric oxygen. It is a chemical process which can be catalysed (accelerated) by small amounts of appropriate metal, usually transition metal, driers, such as cobalt and/or manganese catalysts (siccatives). Suitable oxidative drying inks are for example described in EP 807 670.

A typical printing ink formulation comprises
a) 0.0001 to 25 % by weight of the composition as described above,
b) 5 to 74 % by weight of at least one polymeric binder,
c) 0 to 50 % by weight of at least one solvent,
d) 0 to 25 % by weight of at least one colorant, and
e) 0 to 25 % by weight of at least one further additive,
wherein the sum of components a) to e) adds up to 100%.

Suitable colorants d) are selected conventional dyes and in particular conventional pigments. The term "pigment" is used in the context of this invention comprehensively to identify all pigments and fillers, examples being colour pigments, white pigments, and inorganic fillers. These include inorganic white pigments, such as titanium dioxide, preferably in the rutile form, barium sulfate, zinc oxide, zinc sulfide, basic lead carbonate, antimony trioxide, lithopones (zinc sulfide + barium sulfate), or coloured pigments, examples being iron oxides, carbon black, graphite, zinc yellow, zinc green, ultramarine, manganese black, antimony black, manganese violet, Paris blue or Schweinfurt green. Besides the inorganic pigments the printing ink formulation of the invention may also comprise organic colour pigments, examples being sepia, gamboge, Cassel brown, toluidine red, para red, Hansa yellow, indigo, azo dyes, anthraquinonoid and indigoid dyes, and also dioxazine, quinacridone, phthalocyanine, isoindolinone, and metal complex pigments. Also suitable are synthetic white pigments with air inclusions to increase the light scattering, such as the Rhopaque® dispersions. Suitable fillers are, for example, aluminosilicates, such as feldspars, silicates, such as kaolin, talc, mica, magnesite, alkaline earth metal carbonates, such as calcium carbonate, in the form for example of calcite or chalk, magnesium carbonate, dolomite, alkaline earth metal sulfates, such as calcium sulfate, silicon dioxide, etc.

The printing ink formulation according to the invention may contain at least one additive e). Preferably, the printing ink formulation contains from 0 to 25% by weight, more preferably from 0.1 to 20% by weight, in particular from 1 to 15% by weight, based on the total weight of the printing ink formulation, of at least one component e).

Suitable additives (component e)) are selected from plasticizers, waxes, siccatives, antistatic agents, chelators, antioxidants, stabilizers, adhesion promoters, surfactants, flow control agents, defoamers, biocides, thickeners, etc. and combinations thereof. These additives serve in particular for fine adjustment of the application-related properties of the printing ink, examples being adhesion, abrasion resistance, drying rate, or slip.

The printing ink formulations according to the invention are advantageously prepared in a conventional manner, for example by mixing the individual components. Additional colorants may be employed in the printing ink formulation of the invention or in a separate ink formulation. When additional colorants are to be employed in a separate formulation, the time of application of the printing ink formulation according to the invention is usually immaterial. The printing ink formulation according to the invention can for example be applied first and then be overprinted with conventional printing inks. But it is also possible to reverse this sequence or, alternatively, to apply the printing ink formulation according to the invention in a mixture with conventional printing inks. In every case the prints are readable with suitable light sources.

Primers can be applied prior to the printing ink formulation according to the invention. By way of example, the primers are applied in order to improve adhesion to the substrate. It is also possible to apply additional printing lacquers, e.g. in the form of a covering to protect the printed image. Additional printing lacquers may also be applied to serve aesthetic purposes, or serve to control application-related properties. By way of example, suitably formulated additional printing lacquers can be used to influence the roughness of the surface of the substrate, the electrical properties, or the water-vapour-condensation properties. Printing lacquers are usually applied in-line by means of a lacquering system on the printing machine employed for printing the printing ink formulation according to the invention.

The printing ink formulations according to the invention are also suitable for use in multilayer materials. Multilayer materials are e.g. composed of two or more plastics foils, such as polyolefin foils, metal foils, or metallised plastics foils, which are bonded to one another, by way of example, via lamination or with the aid of suitable laminating adhesives. These composites may also comprise other functional layers, such as odour-barrier layers or water-vapour barriers.

Unless otherwise indicated in the following examples and elsewhere in the specification and claims, all parts and percentages are by weight, temperatures are in degrees centigrade and pressures are at or near atmospheric.

A further aspect of the invention is a security document, comprising a substrate and the composition as described above.

The security document is obtainable by a printing process wherein a printing ink formulation as defined above is applied to a substrate.

The security document of the instant invention is selected from a bank note, a passport, a check, a voucher, an ID- or transaction card, a stamp and a tax label.

Also an aspect of the invention is a process for manufacturing a security document comprising applying a composition of
(a) an IR absorber,
(b) a protective agent having a structural element of formula 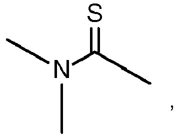 or 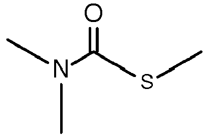 wherein each open valence \ indicates a bond to an organic residue and wherein the structural element may be part of a ring system to a substrate in a printing process.

Yet a further aspect is the use of a protective agent against oxidative degradation of IR absorbers wherein the protective agent has a structural element of formulae 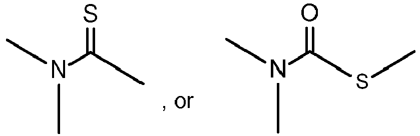 wherein each open valence \ indicates a bond to an organic residue and wherein the structural element may be part of a ring system.

The protective agent is preferably used in a printing ink for security printing.

The definitions and preferences described above are equally applicable for all aspects of the invention.

The following examples illustrate the invention.

Unless otherwise indicated in the following examples and elsewhere in the specification and claims, all parts and percentages are by weight, temperatures are in degrees centigrade and pressures are at or near atmospheric.

### Application Examples

IR Absorbers used are either commercially available or may be prepared according to standard procedures described, for example in WO2006/015414, US2008/0241492, US5,282,894, WO2007/091094, WO2007/132214, M. Arca et al. describe in J. Chem. Soc., Dalton Trans. 1998, 3731-3736, JP2003-262953 A, JP2004-045653 A, JP2005-99755 A, M.C. Aragoni et al. describe in Eur. J. Inorg. Chem. 2003, 1939-1947 and WO 2008/086931, WO 2012/152584 and WO 2012/069518.

The protective agents are widely items of commerce.

### Testing Conditions

### Application Examples

An offset ink is prepared by mixing the following components by means of an automatic pigment muller:

| | |
|---|---|
| offset varnish | 1000 mg |
| 40 parts by weight rosin modified phenolic resin | |
| 27 parts by weight linseed oil | |
| 33 parts by weight printing-ink oil (boiling range 260-290°C) | |
| (a) IR absorber | 40 mg |
| or | |
| (b) IR absorber/protective agent composition | The effective amount of IR absorber corresponds to (a) |
| Siccative | 20 mg |

The ratio between IR-absorber and protective agent varies from 20mg to 200mg per 40mg IR absorber (0.5 : 1 to 1 : 5).

Immediately afterwards the freshly prepared offset ink is printed onto cotton paper with a printability tester (IGT Orange Proofer). Ink transfer: 1 gram/square centimeter. Remission curves are measured after five days storage at room temperature in the dark with an UV/VIS/IR spectrophotometer. Remission values of stabilized and non-stabilized samples are compared at their lamda max in the NIR range.

### Results

| | | Remission un Lamda max. its at | | | |
|---|---|---|---|---|---|
| Compound | Protective Agent | with protective agent | without protective agent | Diff. | Stab.In crease (%) |
| 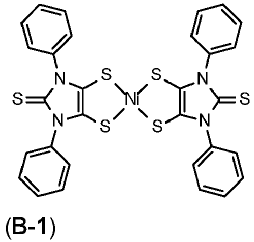 | 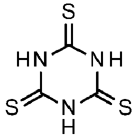 | 35.82 | 53.21 | 17.38 | 137% |
| | (trithiocyanuric acid) | | | | |
| 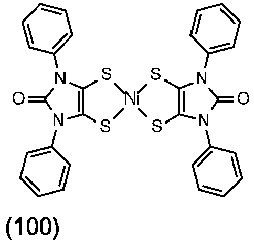 | (trithiocyanuric acid) | 50.68 | 67.34 | 16.66 | 151 |
| 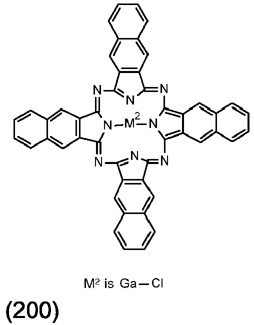 | (trithiocyanuric acid) | 56.71 | 74.25 | 17.54 | 168 |
| 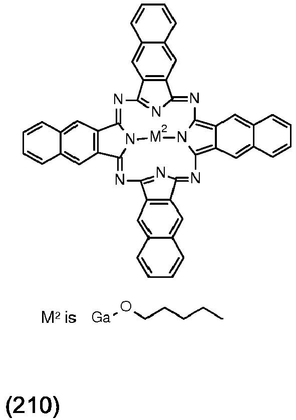 | (trithiocyanuric acid) | 50.50 | 61.51 | 11.01 | 129 |

| | | Remission units at Lamda max. | | | |
|---|---|---|---|---|---|
| Compound | Protective Agent | with protective agent | without protective agent | Diff. | Stab.In crease (%) |
| 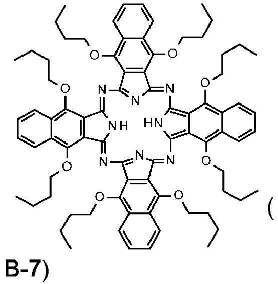 | (trithiocyanuric acid) | 66.81 | 79.88 | 13.06 | 165 |
| 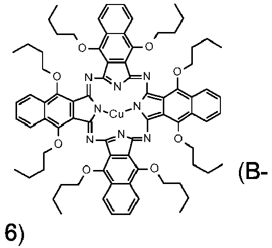 | (trithiocyanuric acid) | 53.79 | 83.35 | 29.55 | 278 |
| 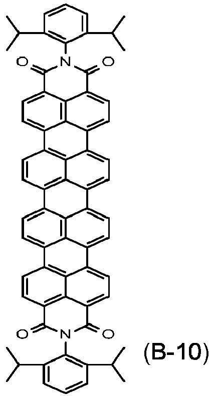 | (trithiocyanuric acid) | 33.20 | 46.43 | 13.23 | 125 |
| 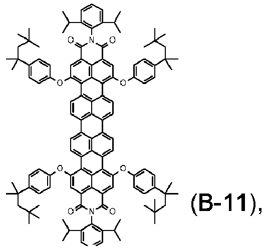 | (trithiocyanuric acid) | 32.87 | 41.58 | 8.71 | 115 |
| 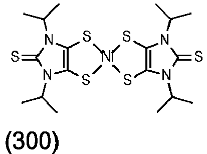 | (trithiocyanuric acid) | 41.23 | 72.24 | 31.01 | 212 |
| 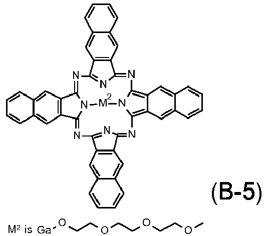 | 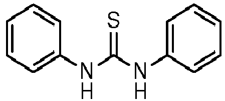 | 53.33 | 74.99 | 21.66 | 187 |

## Claims

1. A printing ink formulation, comprising
(a) a composition, comprising
(a1) an IR absorber,
(b1) a protective agent having a structural element of formula 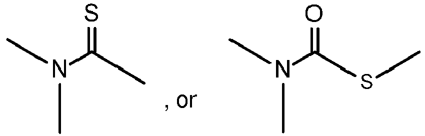 wherein each open valence \ indicates a bond to an organic residue and wherein the structural element may be part of a ring system;
b) a polymeric binder,
e) a solvent,
f) optionally at least one colorant, and
e) optionally at least one further additive, wherein the printing ink is an oxidatively drying ink.

2. The printing ink formulation according to claim 1, wherein the protective agent is a compound of formula (X) 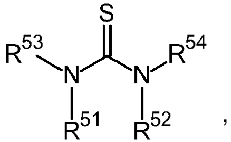 wherein R⁵¹ and R⁵² are independently of each other C₁-C₁₈alkyl, C₁-C₁₈alkenyl orC₆-C₁₀aryl, which may optionally be substituted by Cl, Br or F;
or R⁵¹ and R⁵² together with the atoms to which there are bonded form a ring 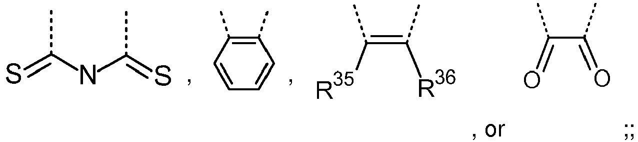 ------ indicates the bond which forms the ring;
R⁵³ and R⁵⁴ are independently of each other H, C₁-C₁₈alkyl or C₁-C₁₈alkenyl which may optionally be substituted by Cl, Br or F;
a compound of formulae 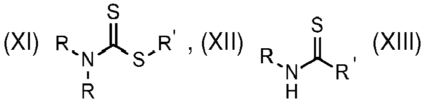 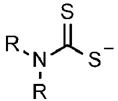 cation⁺ , 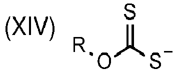 cation⁺ or 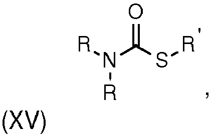 R and R' are independently C₁-C₈alkyl, C₂-C₈alkenyl, phenyl, benzyl, phenethyl, naphthyl or trichlorallyl;
R" is C₁-C₈ alkyl and cation⁺ is the cation of Li, Na, K, or the ammonium or C₁-C₁₈trialkylammonium cation;
or a compound of formula 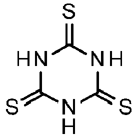 (trithiocyanuric acid).

3. The printing ink formulation according to claim 2, wherein the protective agent is a compound of formula 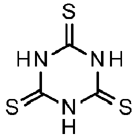 (trithiocyanuric acid), 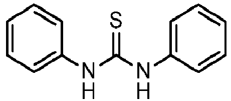 (diphenyl thiourea), 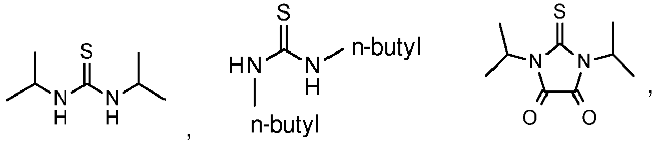 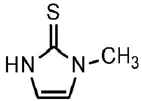 (2-mercapto-1-methylimidazole), 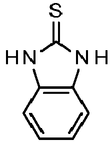 (2-mercapto-benzimidazole), 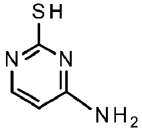 (4-amino-2-mercaptopyrimidine), 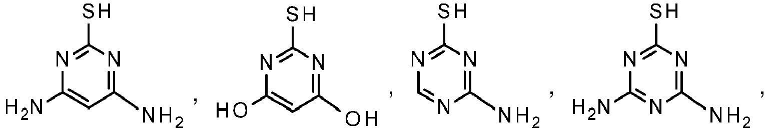 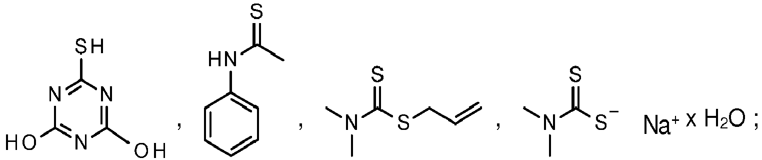 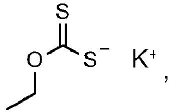 (n-butyl)4N⁺SCN⁻' ((n-butyl)₄N⁺)₂ S₂O₃²⁻ or

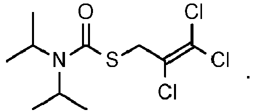

4. The printing ink formulation according to claim 3, wherein the protective agent is a compound of formula 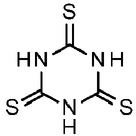 (trithiocyanuric acid), 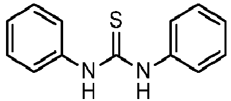 (diphenyl thiourea), 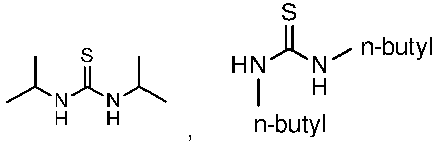 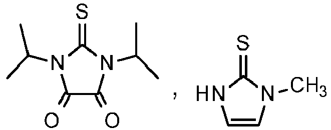 (2-mercapto-1-methylimidazole), 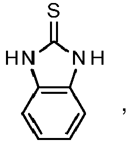 (2-mercapto-benzimidazole), 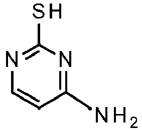 (4-amino-2-mercaptopyrimidine), 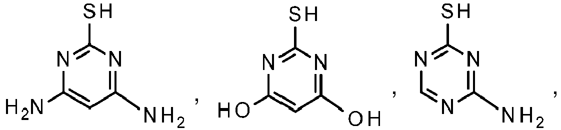 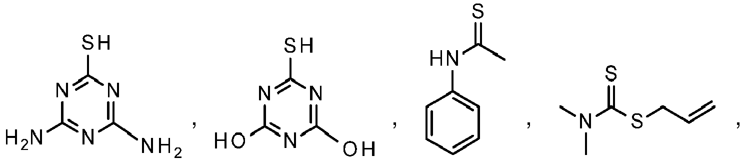 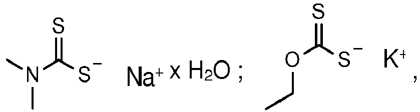 (n-butyl)₄N⁺SCN⁻, ((n-butyl)₄N⁺)₂ S₂O₃²⁻ or

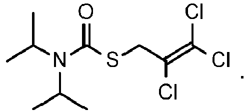

5. The printing ink formulation according to claim 4, the protective agent is a compound of formula 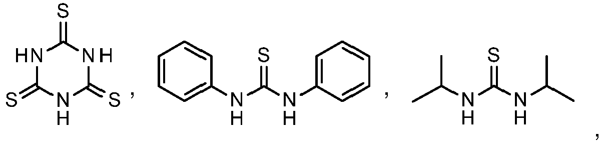 or

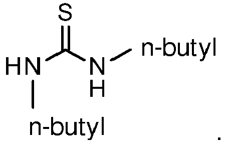

6. The printing ink formulation according to any of claims 1 to 5, wherein the IR absorber is selected from metal dithiolene complexes, polymethines, phthalocyanines, naphthalocyanines, quinone-diimmonium salts, aminium salts, rylenes, indium tin oxide, antimony tin oxide, lanthanum hexaboride, tungsten bronzes, copper salts and mixtures thereof.

7. The printing ink formulation according to according to any of claims 1 to 6, wherein the IR absorber is a metal dithiolene complex of formula (IIa) or (IIb) 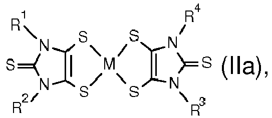 or 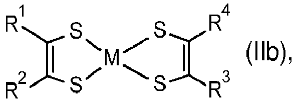 wherein
M is Ni, Pd, or Pt;
R¹, R², R³ and R⁴ are independently of each other C₁-C₂₅alkyl, perfluoro-C₁-C₂₅alkyl, C₆-C₂₄aryl, which may optionally substitueted with F, Cl, CF₃, or OCH₃; or C₂-C₂₀heteroaryl;
a phthalocyanine of formula (IIIa), (IIIb), (IIIc), (IIId) or (IIIe) 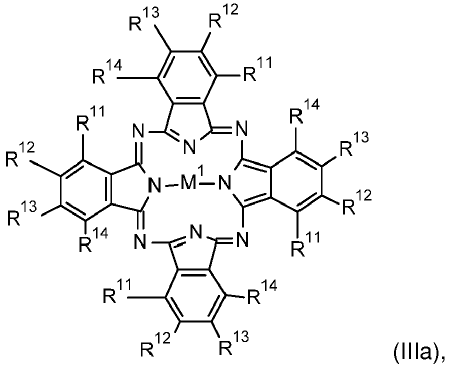 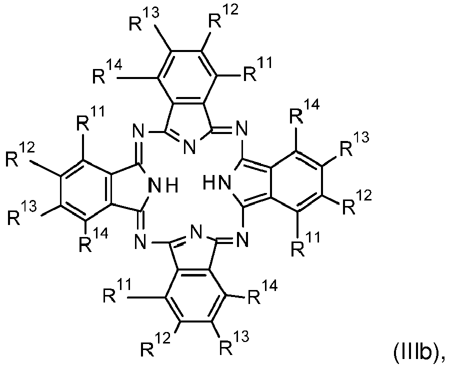 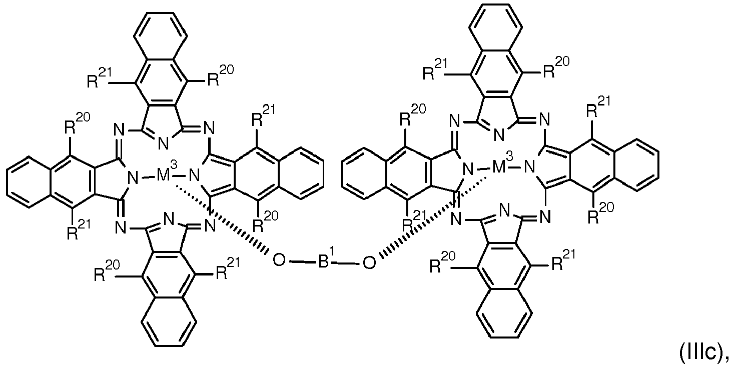 wherein
M¹ is Cu, Fe, Mn, Pd, Pt, VO, Si(OR¹⁶)₂, Al(R¹⁵) or Ga(R¹⁵),
M³ in formula (IIIc) is Al or Ga; and B¹ in formula (IIIc) is C¹-C¹²alkylene, such as -CH₂-CH₂-, C¹-C¹²alkylene which is interrupted by one or more oxygen atoms or C¹-C¹²alkylene which is substituted by at least one OH group, such as -CH₂-HC(OH)-CH₂-;
R¹⁵ is CI, OH, or OR¹⁶;
R¹¹ and R¹⁴ are independently of each other H, F, OR¹⁶, SR¹⁶, or NR¹⁷R^{17'},
R¹² and R¹³ are independently of each other H, F, OR¹⁶, SR¹⁶, NHR¹⁷, or NR¹⁷R^{17'}, R¹⁶ is C₁-C₁₂alkyl, (C₂H₄O)ₙOR¹⁸, or phenyl;
R²⁰ and R²¹ are independently of each other H, F, OR¹⁶, SR¹⁶, NHR¹⁷, or NR¹⁷R^{17'}; R¹⁷ and R^{17'} are independently of each other C₁-C₁₂alkyl, (C₂H₄O)ₙOR¹⁸, or phenyl; or
R¹⁷ and R^{17'} together may represent a 5- or 6-membered aliphatic ring, wherein one C-atom in the ring may be replaced by oxygen, to form a pyrrolidine, piperidine, 2-methylpiperidine or morpholine radical;
R¹⁸ is C₁-C₁₂alkyl;
n is 0 1, 2, 3 or 4; 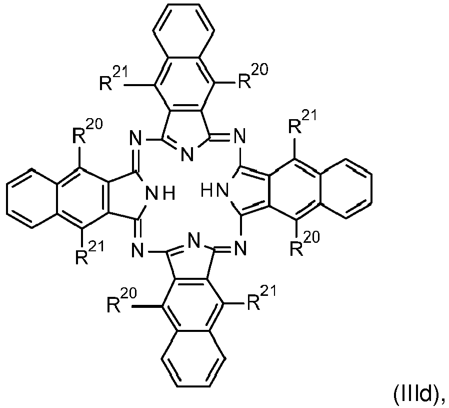 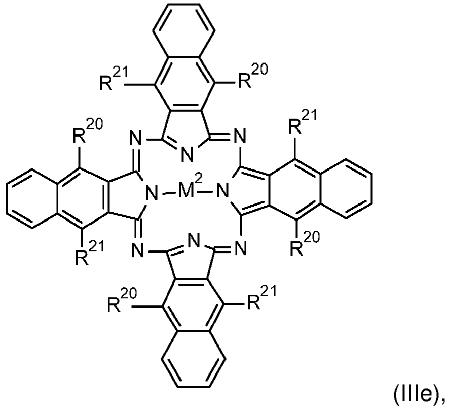 wherein
M² is Cu, Fe, Mn, Pd, Pt, Si(OR¹⁶)₂, Al(R¹⁵) or Ga(R¹⁵),
R¹⁵ is CI, OH, or OR¹⁶;
R²⁰ and R²¹ are independently of each other H, F, OR¹⁶, SR¹⁶, NHR¹⁷, or NR¹⁷R^{17'}, R¹⁶ is C₁-C₁₈alkyl, (C₂H₄O)ₙOR¹⁸, or phenyl;
R¹⁷ and R^{17'} are independently of each other C₁-C₁₂alkyl, (C₂H₄O)ₙOR¹⁸, or phenyl; or
R¹⁷ and R^{17'} together may represent a 5- or 6-membered aliphatic ring, wherein one C-atom in the ring may be replaced by oxygen, such as pyrrolidine, piperidine, 2-methylpiperidine and morpholine;
R¹⁸ is C₁-C₁₂alkyl;
n is 0 1, 2, 3 or 4;
a compound of formulae (IVa) to (IVc) 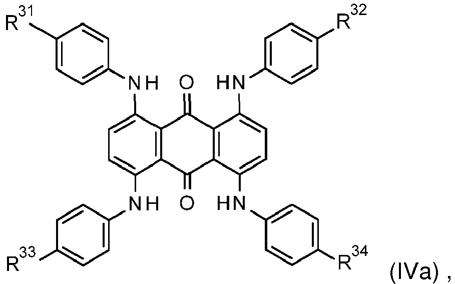 wherein R³¹, R³², R³³ and R³⁴ are independently of each other C₁-C₆alkyl, or C₁-C₄alkoxy; 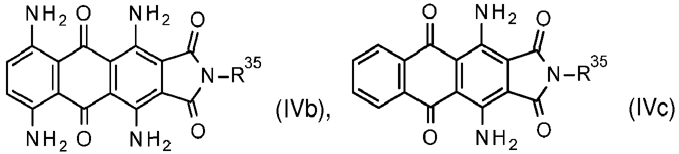 wherein
R³⁵ is C₁-C₁₈alkyl, which can optionally be interupted by 2 to 4 oxygen atoms;
a compound of formulae (Va) or (Vb) 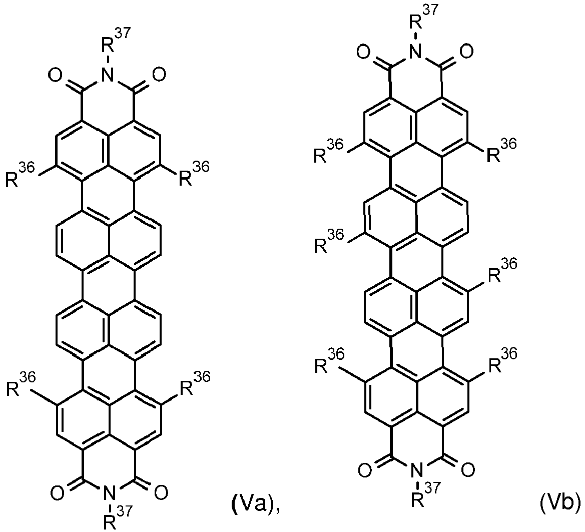 wherein
R³⁶ is H, X¹R³⁸, or NR³⁸R³⁹ ;
X¹ is O, S, or NH;
R³⁸ is C₁-C₄alkyl or phenyl which phenyl can optionally be substituted by C₁-C₁₈alkyl;
R³⁹ is H, or C₁-C₄alkyl;
R³⁷ is C₁-C₁₈alkyl, phenyl, or 2,6-diisopropylphenyl;
a compound of formulae (VIa) to (VIc) 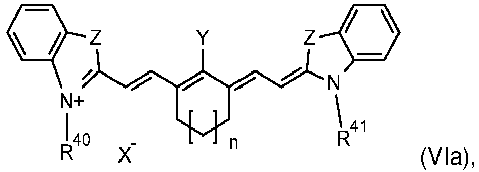 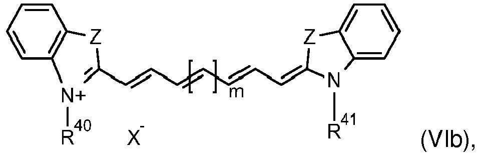 or 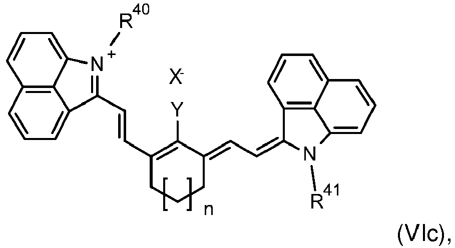 wherein
R⁴⁰ and R⁴¹ are independently of each other C₁-C₁₈alkyl;
Y is Cl, phenyl, 4-dimethylaminopyridyl chloride;
Z is O, S, NMe, or C(CH₃)₂,
n is 0, or 1;
m is 0, 1, or 2; and
X⁻ = I⁻, BF₄⁻, PF₆⁻, R⁴²-C₆H₄-SO₃⁻, and
R⁴² is H, or CH₃.

8. The printing ink formulation according to any of claims 1 to 7, wherein the IR absorber is selected from a compound of formulae 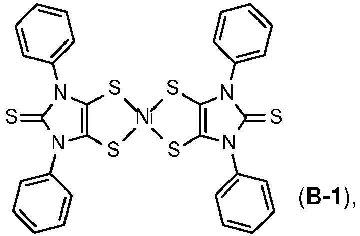 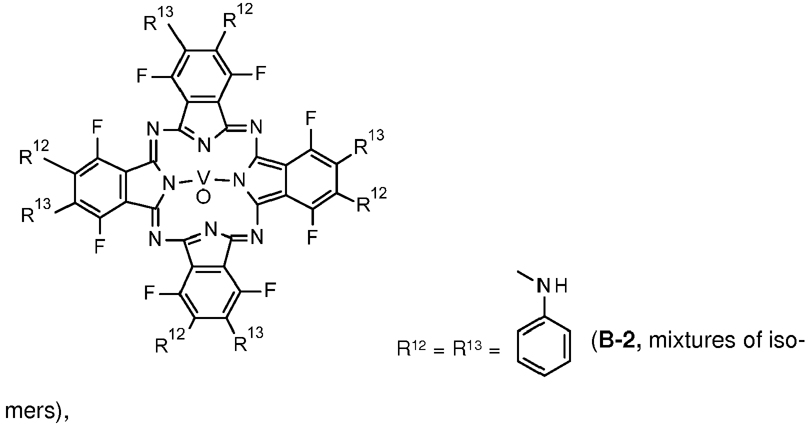 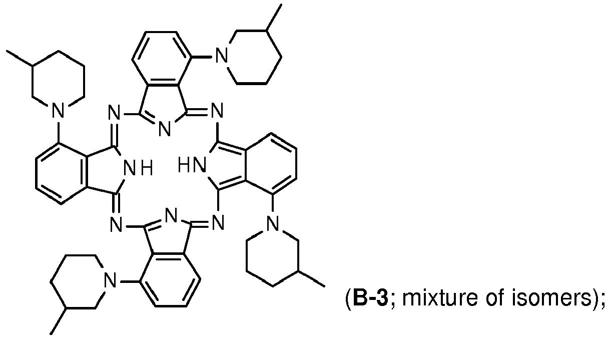 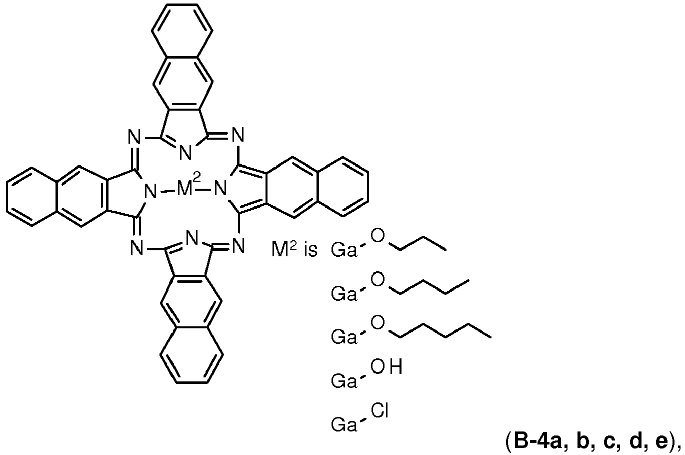 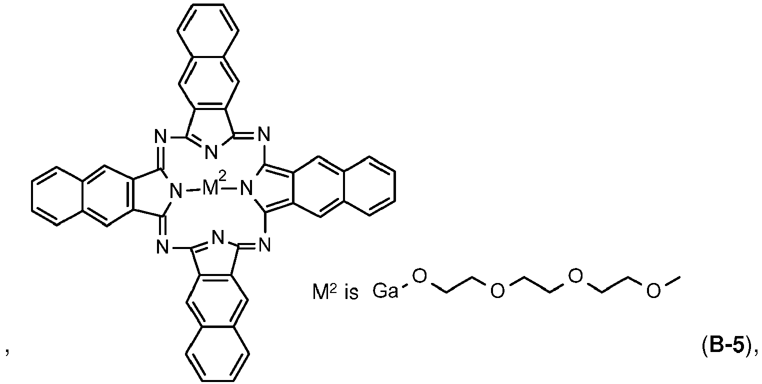 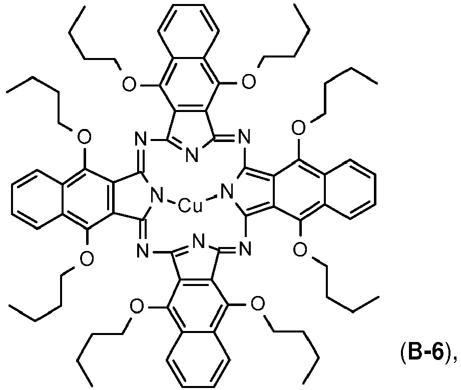 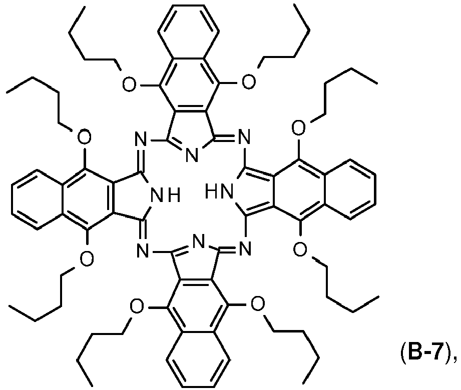 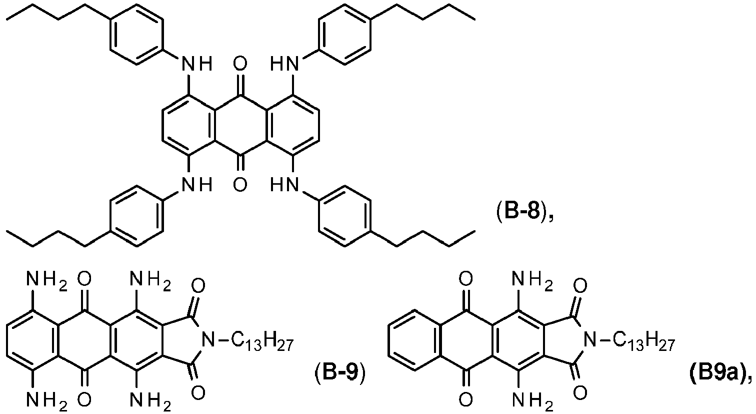 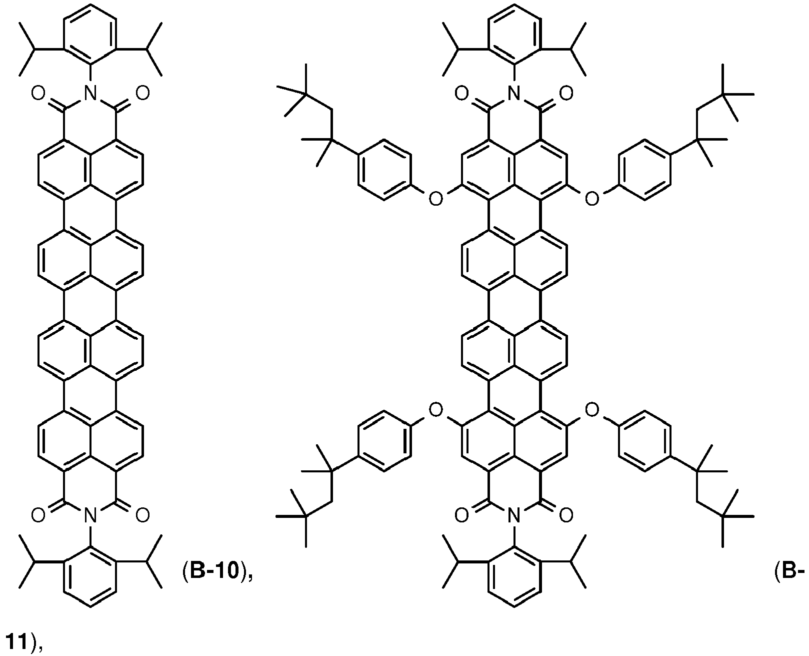 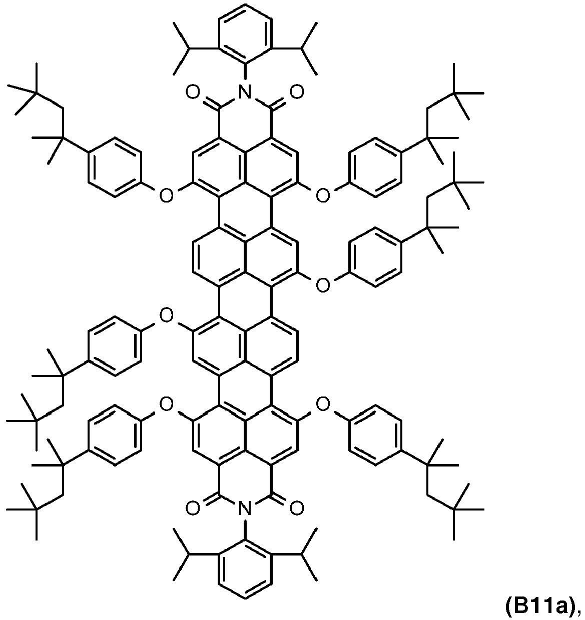 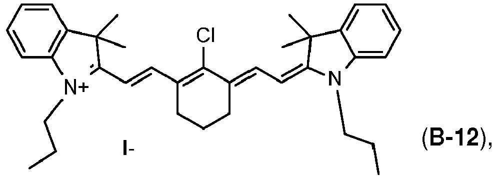 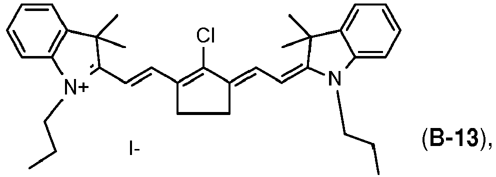 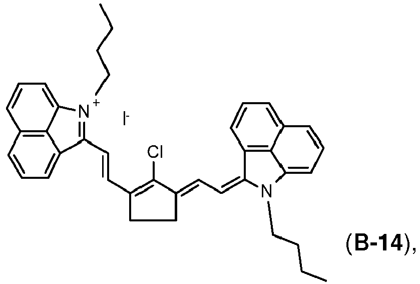 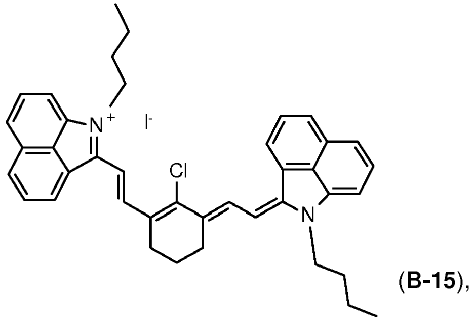 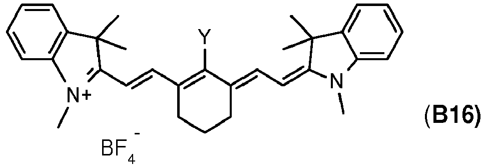 and

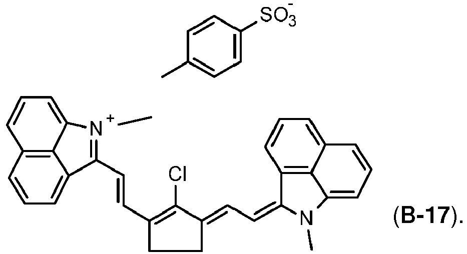

9. The printing ink formulation according to any of claims 1 to 8, wherein the weight ratio between IR absorber and protective agent varies in a range from 5 : 1 to 1 : 5.

10. The printing ink formulation according to claim 1, comprising
a) 0.0001 to 25 % by weight of the composition (a),
b) 5 to 74 % by weight of at least one polymeric binder,
c) 0 to 50 % by weight of at least one solvent,
d) 0 to 25 % by weight of at least one colorant, and
e) 0 to 25 % by weight of at least one further additive,
wherein the sum of components a) to e) adds up to 100%.

11. The printing ink formulation according to any of claims 1 to 10, which is a printing ink formulation for security printing.

12. A security document, obtainable by a printing process wherein a printing ink formulation as defined in any of claims 1 to 11 is employed.

13. The security document according to claim 12, which is selected from a bank note, a passport, a check, a voucher, an ID- or transaction card, a stamp and a tax label.

14. A process for manufacturing a security document comprising applying the printing ink formulation according to any of claims 1 to 11 to a substrate in a printing process.

15. Use of a protective agent against oxidative degradation of IR absorbers having a structural element of formula 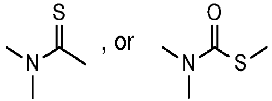 wherein each open valence \ indicates a bond to an organic residue and wherein the structural element may be part of a ring system in an oxidative drying printing ink for security printing.
